# EUROPEAN PATENT APPLICATION

(11) **EP 3 223 133 A1**
(43) Date of publication of application: **27.09.2017**
(21) Application number: 16196987.8
(22) Date of filing: 03.11.2016
(51) Int. Cl.: G06F 3/06

(54) **METHOD FOR SETTING REDUNDANT ARRAY OF INDEPENDENT DISKS**

(30) Priority: 17.03.2016 US 201662309960 P; 19.05.2016 TW 105115453
(71) Applicant: MSI Computer (Shenzhen) Co., Ltd., Shenzhen City Guangdong Province, P.R.C. Guangdong (CN)
(72) Inventor: YOU, Ting-Wei, 722 Tainan City (TW)
(74) Representative: Becker Kurig Straus

(57) **Abstract**

A method for setting redundant array of independent disks (RAID) is provided. A boot firmware is activated such that the boot firmware performs a booting procedure. In a legacy mode of the boot firmware, an extensible firmware interface driver is activated by the boot firmware. A rapid storage technology (RST) driver is activated by the extensible firmware interface driver to perform RAID remapping. A RAID mode is entered after rebooting to set a RAID system. After the RAID system is set completely, an operating system (OS) is loaded.

## Description

### BACKGROUND

### Field of the Invention

The invention is directed to a storage structure and more particularly, to a method for setting redundant array of independent disks (RAID).

### Description of Related Art

Generally, when a user purchases equipment of a computer system, besides the central processor, the selection of storage devices also matters. Atypical hard disk drive (HDD), for example, has a greater storage space and low price, but also has shallow and obvious deficiencies, such as a slow accessing speed and potential risks of damage to its readhead or track due to collision. Nevertheless, a solid state disk (SSD) does not have the aforementioned issues, but has issues with respect to high cost per capacity and short life span.

In conformity with the emergence and popularity of the redundant array of independent disks (RAID) technique, most basic input output systems (BIOS) of computer systems support the RAID function. With use of the function, effects such as increasing the fault tolerance capability, enhancing processing performance and improving data integration for the disks can be achieved. Thereby, the insufficiencies of the storage equipment of the computer systems can be compensated.

However, the currently available RAID technique can only applied to serial advanced technology attachment (SATA) storage devices generally. As for a next generation form factor (NGFF) hard disk, a user has to clearly and correspondingly set according to hardware conditions thereof and has to be familiar with complete steps to achieve the planning of RAID. However, for the sake of complex operation steps and restrictions, the operation of the RAID of the NGFF hard disk is more complicated in comparison with the operation of RAID of SATA hard disk, which easily leads to system data loss or damage due to inadvertence or improper operation.

### SUMMARY

The invention provides a method for setting redundant array of independent disks (RAID), capable of directing to final RAID planning, so as to avoid data loss and damage caused by improper operation.

The method for setting RAID of the invention includes: activating a boot firmware, so as to perform a booting procedure; activating an extensible firmware interface driver by the boot firmware in a legacy mode of the boot firmware; activating a rapid storage technology (RST) driver by the extensible firmware interface driver, so as to perform RAID remapping; entering a RAID mode after rebooting to set a RAID system; and loading an operating system (OS) after the RAID system is set completely.

In an embodiment of the invention, after the step of entering the RAID mode after rebooting to set the RAID system, the method further includes: in an extensible firmware interface mode, when the number of storage devices connected to a mainboard is more than or equal to 1, setting RAID system by the extensible firmware interface driver.

In an embodiment of the invention, the storage device is a next generation form factor (NGFF) hard disk.

In an embodiment of the invention, after the boot firmware is activated, the method further includes: entering a firmware setup menu in the legacy mode; detecting whether a quick operation function of the firmware setup menu is enabled; and when the quick operation function is detected as being enabled in the legacy mode, activating the extensible firmware interface driver by the boot firmware.

In an embodiment of the invention, the method further includes during the process of performing the booting procedure, confirming whether the number of the storage devices connected to the mainboard is more than or equal to 1; when the number of the storage devices connected to the mainboard is more than or equal to 1, providing the quick operation function in the firmware setup menu; and when the number of the storage devices is 0, hiding the quick operation function from the firmware setup menu.

In an embodiment of the invention, the boot firmware is a basic input output system (BIOS).

To sum up, the method for setting RAID of the invention provides more friendly operation experience, which contributes to reducing loss due to failures caused by complex operations, and increasing supportable items by means of modification in operation steps, so as to improve user's willingness of use.

To make the above features and advantages of the invention more comprehensible, embodiments accompanied with drawings are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of an electronic apparatus according to an embodiment of the present invention.
FIG. 2 is a flow chart of a method for setting redundant array of independent disks (RAID) according to an embodiment of the invention.
FIG. 3 is a flow chart of a method for setting redundant array of independent disks (RAID) according to another embodiment of the invention.

### DESCRIPTION OF EMBODIMENTS

During a general process of planning redundant array of independent disks (RAID), users usually have difficulties to understand through guidance of unified instruction while using functions of the RAID due to difference in hardware environment and equipment requirements and have to deal with the situations case by case, which causes troubles in use and easily leads to the reduction of use willingness. Accordingly, the invention provides a method for setting redundant array of independent disks (RAID) capable of directing to final RAID planning, so as to avoid data loss and damage caused by improper operation. In order to make the invention more comprehensible, embodiments are described below as the examples to prove that the invention can actually be realized.

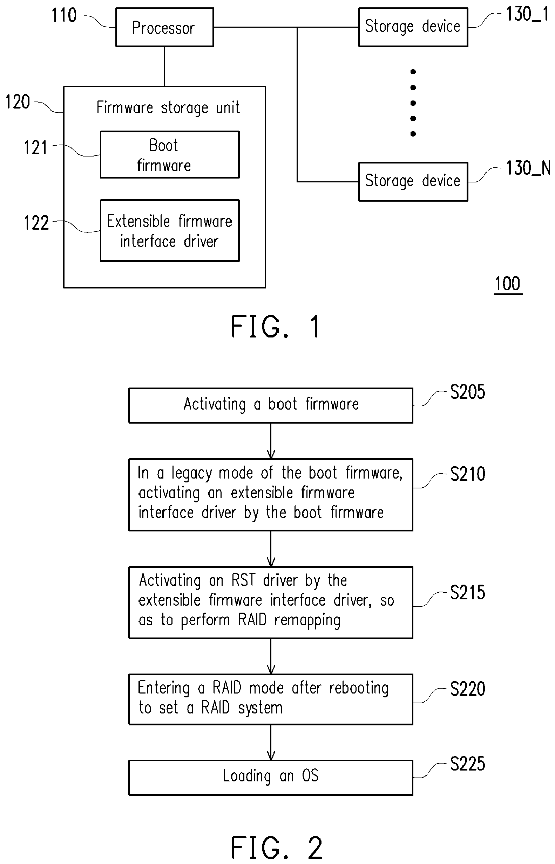

FIG. 1 is a block diagram of an electronic apparatus according to an embodiment of the present invention. Referring to FIG. 1, an electronic apparatus 100 includes a processor 110, a firmware storage unit 120 and a plurality of storage devices 130_1 to 130_N. The processor 110 is coupled to the firmware storage unit 120 and the storage devices 130_1 to 130_N.

The processor 110 may be a central processing unit (CPU), a programmable microprocessor, an embedded control chip, a digital signal processor (DSP), an application specific integrated circuit (ASIC), or any other similar device.

The firmware storage unit 120 is, for example, a read only memory (ROM) or a flash memory. The firmware storage unit 120 stores a boot firmware 121 and an extensible firmware interface driver 122. The boot firmware 121 is configured to execute hardware initialization, test system hardware elements and load a boot loader or an operating system (OS) in a booting process. The boot firmware 121 is, for example, a basic input/output system (BIOS), an extensible firmware interface (EFI) BIOS or a unified extensible firmware interface (UEFI) BIOS.

The storage devices 130_1 to 130_N are, for example, next generation form factor (NGFF) hard disks, i.e., M.2 hard disks. The M.2 hard disk currently provides two interfaces, which are a serial advanced technology attachment (SATA) interface and a peripheral component interconnect express (PCIe) interface.

FIG. 2 is a flow chart of a method for setting redundant array of independent disks (RAID) according to an embodiment of the invention. Referring to FIG. 1 and FIG. 2 simultaneously, in step S205, the boot firmware 121 is activated. Specifically, when the electronic apparatus 100 is powered on, the processor 110 reads the boot firmware 121 from the firmware storage unit 120, so as to perform a booting procedure.

Then, in step S210, in a legacy mode of the boot firmware 121, the extensible firmware interface driver 122 is activated by the boot firmware 121. In this case, the extensible firmware interface driver is a UEFI driver, for example. Generally, the legacy mode is an option that is the most compatible with legacy settings. For instance, in a UEFI-based architecture, the legacy mode refers to the USFI simulating a legacy BIOS by a compatibility support module (CSM), so as to be in favor of activating an OS which does not support USFI booting.

Subsequently, in step S215, a rapid storage technology (RST) driver is activated by the extensible firmware interface driver 122 to perform RAID remapping. Because the RST driver pertains to a UEFI driver, the extensible firmware interface driver 122 (e.g., the UEFI driver) is activated first, and then, the RST driver is executed by the extensible firmware interface driver 122.

Afterwards, in step S220, a RAID mode is entered after rebooting to set a RAID system. In addition, after the RAID remapping operation is performed, and the RAID mode is entered after rebooting, whether the number of the storage devices connected to a mainboard is more than or equal to 1 is further determined. When the number of the storage devices connected to the mainboard is confirmed as being more than or equal to 1, the RAID system is set by the extensible firmware interface driver 122. For instance, after rebooting, a displayed screen is directly guided to a management interface of the RAID. Through the management interface, volumes of the RAID are built, a level of the RAID is set, at least one disk is selected and a capacity of each volume is set.

Lastly, in step S225, after the RAID system is set completely, the OS is loaded after rebooting. In addition, a set of designated hotkeys may be predetermined. During the booting process, when the enablement of the set of designated hotkeys is detected, the extensible firmware interface driver 122 is directly activated by the boot firmware 121 to directly perform other subsequent operations. For instance, the BIOS directly activates the UEFI driver to use the RST driver in a non-UEFI environment, such that the OS limited by the USFI-incompliable environment may be capable of setting RAID for the M.2 hard disks.

Additionally, in other embodiments, a quick operation function may be set in a firmware setup menu, so as to direct to the final planning of the RAID through the enablement of the quick operation function.

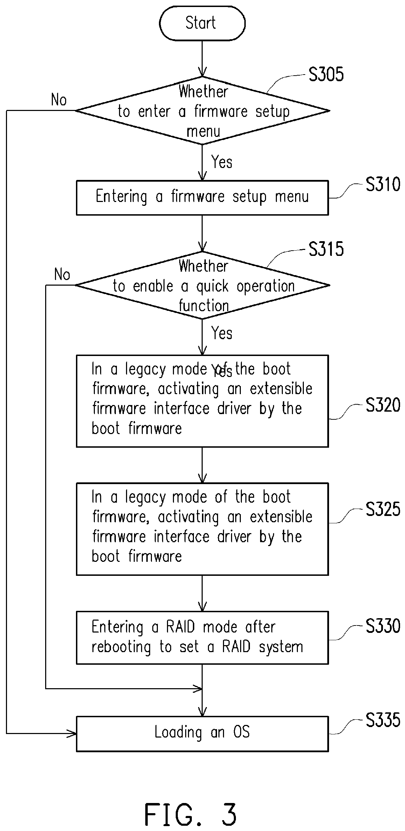

FIG. 3 is a flow chart of a method for setting redundant array of independent disks (RAID) according to another embodiment of the invention. Referring to FIG. 1 and FIG. 3 simultaneously, after the power is on, the processor 110 activates the boot firmware 121 to perform a booting procedure. During the process of performing the booting procedure, referring to step S305, the boot firmware 121 determines whether to enter a firmware setup menu. If the boot firmware 121 determines not to enter the firmware setup menu during the process of performing the booting procedure, referring to step S335, the OS is directly loaded after the booting process is completely performed. If the boot firmware 121 determines to enter the firmware setup menu during the process of performing the booting procedure, referring to step S310, the firmware setup menu is entered. For instance, when the boot firmware 121 detects that a predetermined hotkey is enabled, the firmware setup menu is entered.

After entering the firmware setup menu, in step S315, the boot firmware 121 determines whether to enable a quick operation function. In the present embodiment, the quick operation function is provided in the firmware setup menu of the boot firmware 121. The final planning of the RAID may be simply directed to by utilizing the quick operation function. That is, in the legacy mode, the firmware setup menu is entered by the boot firmware 121 and whether the quick operation function of the firmware setup menu is enabled is detected by the boot firmware 121.

When the enablement of the quick operation function is not detected, referring to step S335, the OS is directly loaded after the booting procedure is completely performed. When the enablement of the quick operation function is detected in the legacy mode, referring to step S320, the extensible firmware interface driver 122 is activated by the boot firmware 121.

Thereafter, in step S325, the RST driver is activated by the extensible firmware interface driver 122 to perform RAID remapping. Meanwhile, in step S330, a RAID mode is entered after rebooting to set a RAID system.

Additionally, during the process of performing the booting procedure, whether the number of storage devices connected to a mainboard is more than or equal to 1 is further determined by the boot firmware 121. In this case, the setting step may further include the following. Namely, when the processor 110 confirms that the number of the storage devices is more than or equal to 1, the quick operation function is provided in the firmware setup menu; and when the processor 110 confirms that the number of the storage devices is 0, the quick operation function is hidden from the firmware setup menu. This is because the RAID is incapable of being set when the number of the storage devices is equal to 0. Therefore, the quick operation function may further be set to be hidden from the firmware setup menu.

Additionally, when confirming that the number of the storage devices is equal to 1, the processor 110 still provides the function of setting RAID; however, the processor 110 enters the management interface of the RAID according to an instruction after receiving the instruction input by the user, instead of automatically directing to the management interface of the RAID.

In other embodiments, when confirming that the number of the storage devices is 0, the processor 110 may send a prompt message to inform the user that the current number of the storage devices is insufficient for setting RAID when the quick operation function is enabled, without hiding the quick operation function from the firmware setup menu.

An example that the boot firmware 121 is a BIOS, the extensible firmware interface driver 122 is a UEFI driver, and the storage devices 130_1 to 130_N are M.2 hard disks will be provided for description hereinafter. During the process of booting, the BIOS automatically performs the confirmation operation on the hard disks in advance. The M.2 hard disks presently provide the SATA interface and the PCIe interface. Thus, the number and type of the currently configured M.2 hard disks, and which group the RAID corresponding to the M.2 hard disks is remapped to are determined according to the SATA and the PCIe interfaces, such that whether the electronic apparatus 100 supports the RAID is determined to decide whether to automatically direct to the disk planning function of the RAID.

In light of the foregoing, the electronic apparatus can be automatically directed to the RAID mode by the boot firmware in the legacy mode during the booting process. Meanwhile, the method for setting RAID introduced above provides friendly operation experience. Namely, after entering the firmware setup menu, the boot firmware can complete all the settings and automatically enter the RAID mode through the quick operation function provided in the firmware setup menu. Thereby, a personalized management interface of the RAID is presented to the user, and after the user completes the planning of the RAID, the settings of the entire RAID is also completed. Accordingly, the times for rebooting can be reduced, the loss due to failures caused by overly complicated control and operations can be mitigated, and system supportable items can be increased by the modification of operation steps, such that the user's willingness of use can be increased.

## Claims

1. A method for setting redundant array of independent disks (RAID), comprising:
activating (S205) a boot firmware (121), so as to perform a booting procedure;
in a legacy mode of the boot firmware (121), activating (S210) an extensible firmware interface driver (122) by the boot firmware (121);
activating (S215) a rapid storage technology (RST) driver by the extensible firmware interface driver (122), so as to perform RAID remapping;
entering (S220) a RAID mode after rebooting to set a RAID system; and
loading (S225) an operating system (OS) after the RAID system is set completely.

2. The method according to claim 1, after the step of entering the RAID mode after rebooting to set the RAID system, the method further comprises:
when the number of storage devices (130_1~130_N) connected to a mainboard is more than or equal to 1, setting RAID system by the extensible firmware interface driver (122).

3. The method according to claim 2, wherein the storage device is a next generation form factor (NGFF) hard disk.

4. The method according to claim 1, after the step of activating the boot firmware (121), the method further comprises:
in the legacy mode, entering (S310) a firmware setup menu;
detecting (S315) whether a quick operation function of the firmware setup menu is enabled; and
when the quick operation function is detected as being enabled in the legacy mode, activating (S320) the extensible firmware interface driver (122) by the boot firmware (121).

5. The method according to claim 4, further comprising:
during the process of performing the booting procedure, confirming whether the number of storage devices (130_1∼130_N) connected to a mainboard is more than or equal to 1;
when the number of the storage devices (130_1~130_N) connected to the mainboard is more than or equal to 1, providing the quick operation function in the firmware setup menu; and
when the number of the storage devices (130_1~130_N) is 0, hiding the quick operation function from the firmware setup menu.

6. The method according to claim 5, wherein the storage device (130_1~130_N) is an NGFF hard disk.

7. The method according to claim 1, the boot firmware (121) is a basic input output system (BIOS).
